# EUROPEAN PATENT SPECIFICATION

(11) **EP 0 642 417 B1**
(45) Date of publication and mention of the grant of the patent: **17.12.1997**
(21) Application number: 92913243.9
(22) Date of filing: 29.05.1992
(51) Int. Cl.: B32B 17/10, C03C 27/12

(54) **AN IMPACT-RESISTING GLAZING STRUCTURE**
EINE SCHLAGFESTE GLASSTRUKTUR
STRUCTURE DE VITRAGE RESISTANT AUX CHOCS

(43) Date of publication of application: 15.03.1995
(73) Proprietor: E.I. DU PONT DE NEMOURS AND COMPANY, Wilmington Delaware 19898 (US)
(72) Inventor: SCHINDLER, Darrel, L., Wilmington, DE 19810 (US); SMITH, Charles, Anthony, Vienna, WV 26105 (US); GOHIL, Ramesh, M., Circleville, OH 43113 (US)
(74) Representative: Woodcraft, David Charles
(86) International application number: US9204473
(87) International publication number: WO9324320

(56) References cited:
- FR-A- 2 272 237
- LU-A- 68 310
- US-A- 4 072 779

## Description

This invention relates to glazing structures which substantially resist penetration by objects propelled by humans or other means. In particular, the structures resist penetration by storm driven objects and objects commonly used in burglaries to gain entry, such as bricks, rocks, sticks, baseball bats and tire irons.

Various types of glazing structures have been developed which resist penetration by objects which are propelled against a surface of the structure. Glass laminations, commonly referred to as safety glass, consisting of a plurality of glass sheets and interlayers have been made. These structures are generally thick, heavy constructions which are not adaptable for use in usual framing applications and are expensive to fabricate. In addition, plastic sheeting, such as polycarbonate sheeting has been used. However, such sheeting is relatively costly and has limited chemical and weathering resistance. Other glass/plastic laminates are known, including insulated glazing structures. These structures suffer from the same deficiencies as noted above. Also, the insulated structures tend to fog due to condensation of moisture which enters the gas space between the glass panes. What is needed is a light weight impact resisting structure which is adaptable for use in usual framing applications which avoids the problems noted.

US-A-4072779 discloses asymmetrically stretched polyester films and the lamination of such films to a glass sheet to manufacture an automobile windscreen. This reference is not concerned with producing a glazing structure having improved impact resistance, and its stated object is to produce a laminated windscreen which has improved optical properties and which is also frangible.

According to one aspect of the present invention there is provided an insulated impact-resisting glazing structure comprising two sheets of glass spaced apart by an interior spacer positioned along the periphery of said sheets of glass providing a gas space therebetween, one sheet of glass having on its interior surface a polyester film adhered to said surface by a sheet of adhesive film, said structure having a seating member positioned around its periphery to maintain an air-tight space between said sheets of glass, said polyester film being asymmetrically oriented to provide dominant physical properties in its transverse direction.

According to a second aspect of the invention there is provided an insulated impact-resisting glazing structure having improved moisture resistance comprising a support frame and a multilayered composite secured in said support frame, said composite comprising two sheets of glass spaced apart by an interior spacer positioned along the periphery of the sheets of glass to provide a gas space therebetween, one of said sheets of glass having on its interior surface a polyester film adhered to said surface by a sheet of adhesive film, said composite having a sealing member positioned around its periphery to maintain an air-tight space between said sheets of glass, said polyester film and said adhesive film approaching but spaced from said spacer, said polyester film being asymmetrically oriented to provide dominant physical properties in its transverse direction.

Preferably, the adhesive film is polyvinyl butyral and the polyester film is a polyethylene terephthalate film.

FIG. 1 is a schematic section, showing a glazing structure for which no protection is sought.

FIG. 2 and FIG. 2A are schematic sections showing insulated glazing embodiments of the invention.

FIGS. 3-9 show graphic depictions of properties of a polyester film useful in the invention.

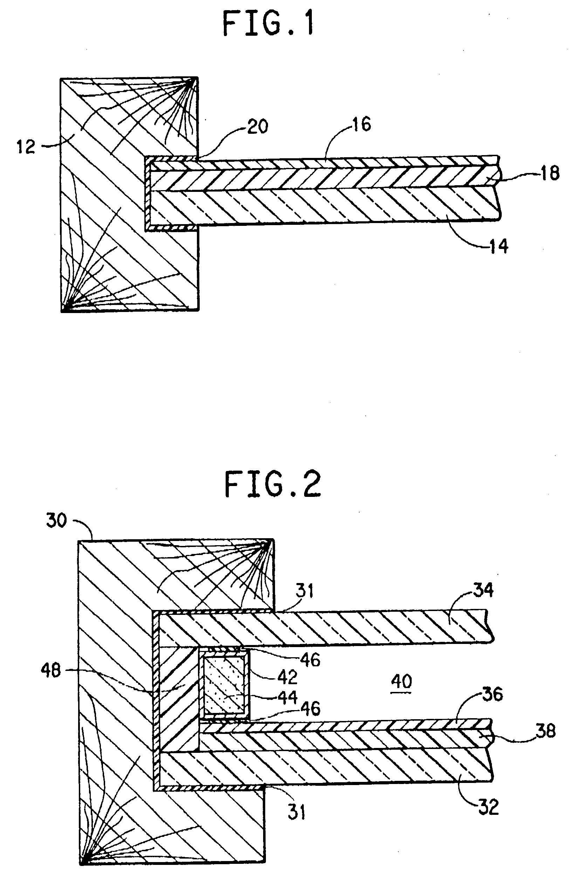

Referring to FIG. 1 of the drawings, an impact resistant glazing structure is comprised of support frame 12 and a multilayered laminate comprised of a sheet of glass 14, polyester film 16 which will be described with more particularity later herein and a sheet of adhesive film 18 which is sandwiched between the glass and polyester film. The laminate is secured in frame 12 by an adhesive sealant 20.

Glass sheet 14 is positioned in a direction likely to receive an impact. Surprisingly, the thickness of the glass does not materially influence the impact resistant character of the structure. The glass may be tempered or untempered. Tempered glass is preferred for some applications. Thicknesses of the glass may vary from 2 mm to 12 mm, the major consideration being to keep the thickness to a dimension which can be accommodated in a standard glazing frame.

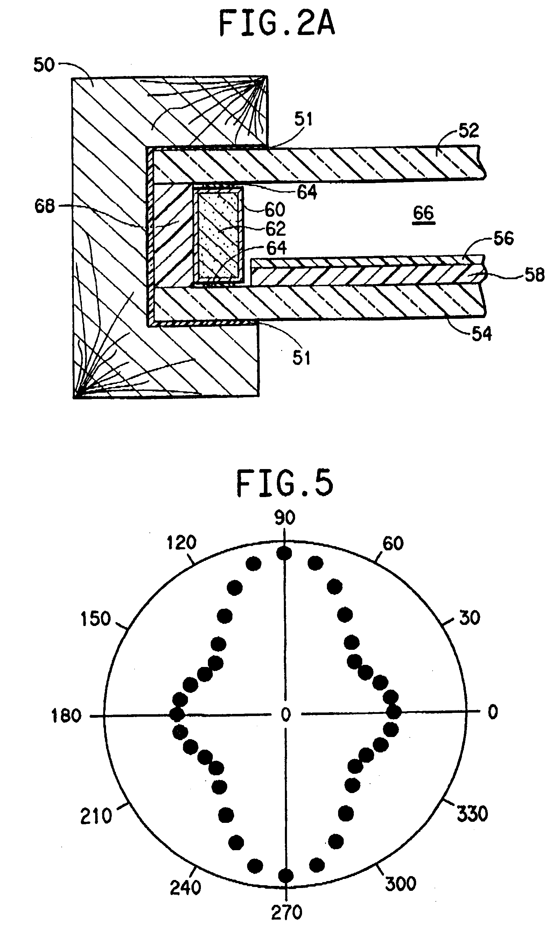

In an embodiment of the invention shown in FIG. 2, an insulated glazing structure is provided by sealing in a frame 30 two glass sheets 32 and 34. Sealant 31 assists in securing the glass in frame 30. Polyester film 36 is laminated to glass sheet 32 using adhesive film 38. A gas space 40 about 5/8 in (15.875 mm) wide separates the two sheets of glass. An aluminium spacer 42 containing a dessicant 44 separates the glass sheets. A sealant 46 provides a moisture barrier around the glass sheets. There are small holes in the spacer leading into gas space 40. These holes allow moisture which is sealed inside the unit during its manufacture to become absorbed by the dessicant, trapping it so that it does not condense and fog the glass. Sealing member 48 extends around the periphery of the structure providing an air-tight seal for the space between the sheets of glass. Slight imperfections or rupture of sealing member 48 tend to permit wicking of moisture in to gas space 40.

In a preferred embodiment of this invention shown in FIG. 2A, an insulated glazing composite comprising two glass sheets 52 and 54 are secured in support frame 50. The glass sheets are spaced apart and sheet 54 has on its interior surface a polyester film 56 adhered to the interior surface of the glass by a sheet of adhesive film 58. An aluminum spacer 60 containing a dessicant 62 separates the glass sheets. A sealant 64 provides a moisture barrier around the glass sheets. There are small holes in the spacer leading into gas space 66. These holes allow moisture which is sealed inside the unit during its manufacture to become absorbed by the dessicant, trapping it so that it does not condense and fog the glass. The glazing structure has a sealing member 68 around its periphery to maintain an air-tight space between the sheets of glass. The polyester film 56 and adhesive sheet 58 approach but do not contact the sealing member. The insulated structure is sealed in frame 50 using a sealant 51. Quite surprisingly, spacing the polyester film 56 and adhesive sheet 58 from the sealing member 68 and spacer 60 does not significantly affect the impact resistance of the structure. It is also surprising that this embodiment alleviates the problem of moisture being wicked into the air-tight space 66 between the sheets of glass. Although it is usual to place a dessicant in the space between the sheets of glass, with the influx of moisture the dessicant soon becomes moisture laden and ineffective.

The polyvinyl butyral adhesive sheeting may be selected from the many commercially available grades of plasticized polyvinyl butyral. A particularly desirable product of the type disclosed in Moynihan, US Patent 4,292,372 is sold by E. I. du Pont de Nemours & Co. under the trademark Butacite®. The polyvinyl butyral film should have a thickness from 10 to 60 mils (0.25 mm to 1.52 mm). Other adhesive sheeting materials such as polyurethanes and the like may be substituted for the polyvinyl butyral film.

Polyester film which is asymmetrically oriented is generally described in Knox, US Patent 4,072,779; however, Knox provides no teaching of the special requirements for the polyester film useful in this invention. The polyester film useful in this invention is asymmetrically oriented preferentially in the transverse direction (TD) and heat set. In-plane orientations of crystallites and amorphous molecules and attendant properties provided thereby are very important for impact resistance of the glass laminates of this invention. Transverse direction (TD) and machine direction (MD) as used herein refer to the direction of travel of the polyester web during its manufacture. The polyester film should have a thickness from 4 to 14 mils (0.10 mm to 0.36 mm). The outer surface of the polyester film may be coated with an abrasion resistant material as disclosed in Knox.

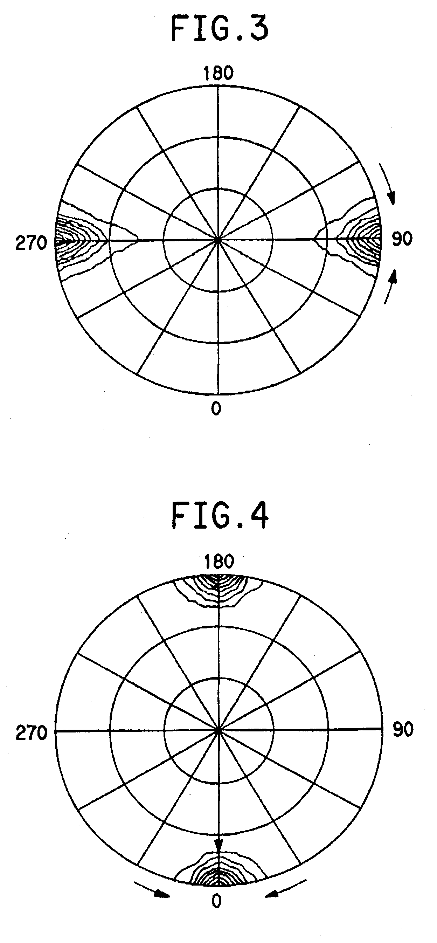

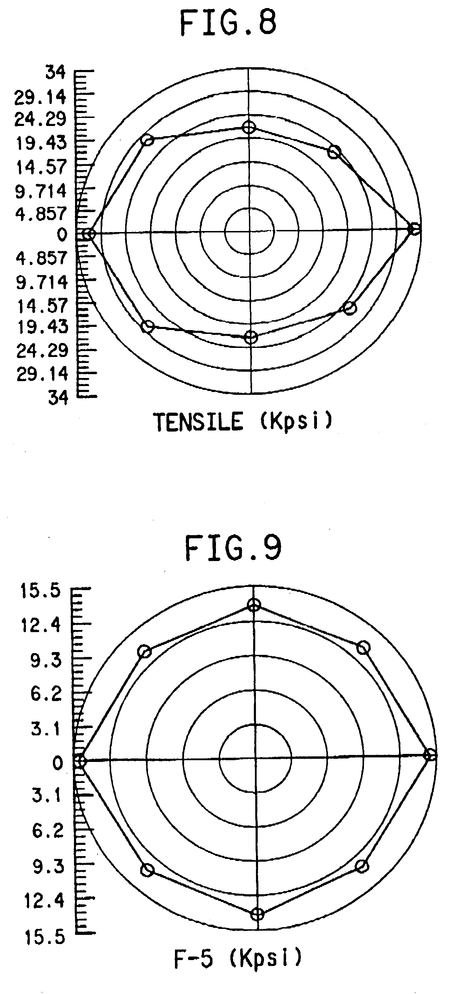

The polyester film useful in this invention should have a special in-plane distribution of crystalline and amorphous phases. All (100) planes of the polyester crystals should lie in the film plane and crystals with molecular or chain axes are oriented toward the TD. In addition molecules in the amorphous region are oriented preferentially in the TD. The overall orientation of both the crystalline and amorphous phases as measured by refractive index is higher along the TD. Distribution of the orientation of the crystalline and amorphous orientations can vary, as measured by refractive index, fluorescence spectroscopy and wide angle x-ray pole figure analysis, by up to 20% of the values shown in FIGS. 3-11 and still provide a film which when incorporated in the laminated structure of this invention gives excellent impact resistance.

FIGS. 3 and 4 show crystalline orientation for polyethylene terephthalate films useful in this invention. Referring to FIG. 3, wide angle x-ray pole figure analysis of a polyethylene terephthalate film from (°105) planes shows an absence of any intensity in the center of the pole figure which indicates an absence of machine direction (MD) oriented crystals in the film. It shows that crystals with molecular chain axes are oriented toward the TD. At a particular TD draw ratio properties along the MD and TD become the same in the film plane. This is defined as "balanced properties" and the particular TD draw ratio as the "balance point". The film is preferentially, i.e., "over-oriented", along the TD after achieving the "balanced point."

The film is highly uniplanar. This is determined from the benzene ring orientation which lies in the (100) planes. As shown in FIG. 4, the angle (phi) describing the intensity arising from the (100) planes is about 15°.

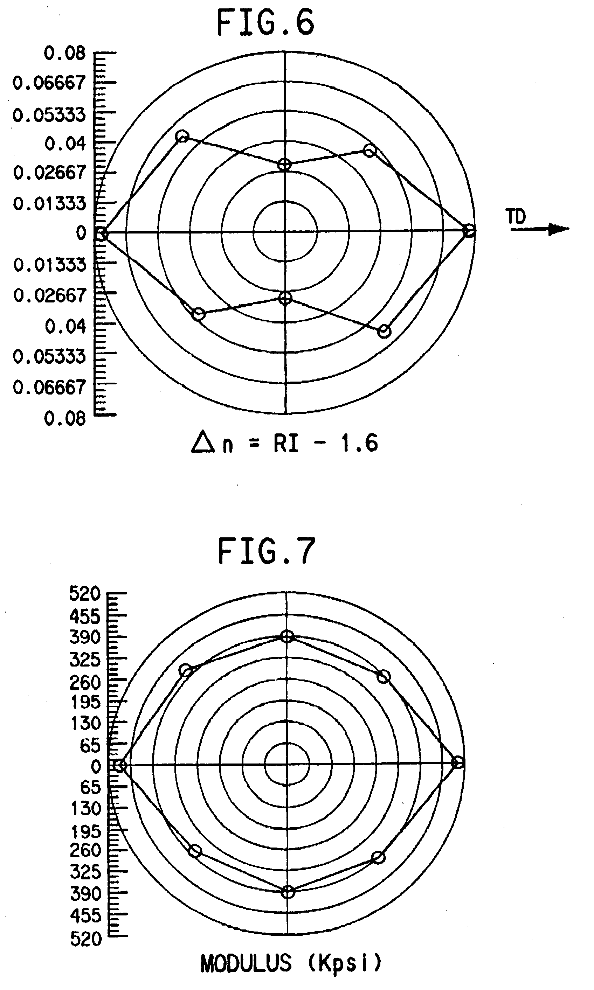

FIG. 5 is a polar plot showing the amorphous orientation of molecules in the amorphous phase of the film as determined from the chain intrinsic fluorescence spectroscopy at 390 nm. The distribution of intensity arising from the intrinsic fluorescence shows that the amorphous orientation at different angles in the film plane is larger along the TD. As shown in FIG. 6 the overall molecular orientation (in crystalline and amorphous planes) is also dominant along the TD.

FIGS. 7-9 are polar plots showing the distribution of mechanical properties such as tensile modulus, tensile strength and F-5 (stress at 5% strain in the stress-strain curve) at different angles in the film plane due to the different molecular orientation described above. In all cases the mechanical properties are dominant along the TD.

The polyester film may be prepared by extruding molten polymer onto a cool quench roll to form an amorphous film using the method and apparatus described in U.S. Patent No. 3,223,757. The amorphous film is stretched at an elevated temperature first in the MD, and it is then stretched a greater amount in the TD. Stretching may be carried out simultaneously is the TD and MD so long as the film is asymmetrically oriented to provide dominant physical properties in the TD.

The present invention has been described and exemplified with particular reference to the use of polyethylene terephthalate film, however, it is to be understood that the invention comprehends using any similar asymmetrically oriented polyester films, copolyesters such as copolymers of polyethylene terephthalate and polyethylene isophthalate, as well as other polyesters such as polyethylene naphthalate. In addition the polyester film may be coated, for example with a reflective coating for solar heat control, and the film can be tinted and/or printed for aesthetic and/or commercial advertising purposes.

In preparing the glazing structures of this invention the polyester film is bonded to the glass using an adhesive such as polyvinyl butyral by applying heat and pressure to the structure. An abrasion resistant material may be applied to the polyester outer surface and the combined structure cured at temperatures from about 130 to 150° C. for 7 to 180 minutes. The resulting bonded structure is optically clear. Insulated glazing structures may be prepared using the glass/plastic laminate of this invention assembled using known components by known methods.

Care must be taken to securely anchor the glazing in the framing member which may be selected from known materials such as wood, plastics such as polyvinyl chloride, aluminum and steel. It has been found that an overlap of from about 3/8 to 3/4 in.(0.95 to 1.9 mm) at each edge of the glazing is needed to retain the glass laminate securely in the frame. The glazing is sealed in the frame using known sealants such as room temperature vulcanizing (RTV) silicon sealants and the like.

The invention will be further illustrated by the following examples.

### EXAMPLES

### EXAMPLE 1

A series of 12 sq ft (1.1 sq m) windows 3 ft x4 ft.(0.9 X 1.2 m) using wood framing were constructed using as glazing the following materials:
(1) 5 mm thick annealed glass,
(2) 5 mm thick tempered glass,
(3) 5 mm thick annealed glass surfaced with commercial polyethylene terephthalate film (PET) 3 mils (0.0762 mm) thick using a pressure sensitive acrylic adhesive (PSA) to adhere the film to the glass,
(4) 2 plies of 5 mm thick annealed glass laminated together with a 30 mil (0.76 mm) polyvinylbutyral film (PVB) interlayer (a typical safety glass construction), and
(5) 5 mm thick annealed glass with a laminated plastic composite of 30 mils (0.76 mm) of polyvinyl butryal film and 7 mils (0.178 mm) of polyethylene terephthalate film.
The PET film was prepared by stretching an amorphous film in the MD 3.4X at a temperature of 90-95°C and in the TD 3.8X at temperature of 105-110°C. The stretched film was heat set at 200-205°C and heat relaxed under reduced tension to give a MD shrinkage of about 0.8% at 150°C.

The series of structures were subjected to a test which consisted of simulating 100 mph wind velocity, by pulling a vacuum behind the window, and then pitching five standard baseballs weighing 0.32 lb.(145.15 gms) at the window at 85 mph using a commercially available baseball pitching machine. The test was designed to be reproducible and severe and could represent objects that are either propelled by vandals or by a wind storm.

Care was taken to adequately secure the glazing in the framing members. Frames were designed so that at least 3/4 in. (19 mm) of each edge of the glazing was covered by the framing members, and the glazing was secured in the framing members using RTV silicon sealant.

The results obtained are summarized in Table 1 which follows:

**Table 1**

| Sample | Results |
|---|---|
| | No. of baseball hits necessary to penetrate the glass/plastic laminate |
| (1) Annealed glass | Massive failure lst hit* |
| (2) Tempered glass | Massive failure 2nd hit* |
| (3) Annealed glass protected with PET 3 mils (0.0762 mm) adhered with acrylic adhesive | Failure-Penetrated 1st hit* |
| (4) Laminated safety glass | Failure-Penetrated 5th hit* |
| (5) Glass laminated with PET/PVB plastic composite | No penetration from all 5 hits |

| | |
|---|---|
| (*Vacuum was lost after the window was penetrated.) | |

The only window which would have prevented entry of water or wind after the test was No. (5), the glazing structure of this invention. In all tests the glass was cracked.

### EXAMPLE 2

A series of tests was conducted to illustrate the penetration resistance of glazing structures against onslaughts typically encounter in "smash and grab" burglaries.

Twelve square foot (1.12 sq m) windows of the type described in Example 1 were assembled using
(1) 5mm thick annealed glass,
(2) 5mm thick tempered glass, and
(3) 5mm thick annealed glass with a laminated plastic composite consisting of 30 mils (0.76 mm) of PVB and 7 mils (0.178 mm) PET film described in Example 1.

A man weighing 200 lbs. (90.72 kg) then tested the penetration resistance of the windows by attacking them with a 3 ft (0.9 m) long piece of 2 ftx4 ft (0.6 m x 1.22 m) lumber. In the case of both the annealed and tempered glass, massive failure occurred within seconds of the attack. In the case of the glass/plastic composite of this invention, the window was battered until the attacker ran out of energy. Although small holes approximately 1 in x 2 inches (25.4 mm x 50.8 mm) were punched through the glass/plastic composite, no hole was large enough to permit extending a hand or arm through the opening.

## Claims

1. An insulated impact-resisting glazing structure comprising two sheets of glass (32)(34) spaced apart by an interior spacer (42) positioned along the periphery of said sheets of glass providing a gas space (40) therebetween, one sheet of glass (32) having on its interior surface a polyester film (36) adhered to said surface by a sheet of adhesive film (38), said structure having a sealing member (48) positioned around its periphery to maintain an air-tight space between said sheets of glass, said polyester film being asymmetrically oriented to provide dominant physical properties in its transverse direction.

2. An insulated impact-resisting glazing structure having improved moisture resistance comprising a support frame (50) and a multilayered composite secured in said support frame, said composite comprising two sheets of glass (52)(54) spaced apart by an interior spacer (60) positioned along the periphery of the sheets of glass to provide a gas space (66) therebetween, one of said sheets of glass (54) having on its interior surface a polyester film (56) adhered to said surface by a sheet of adhesive film (58), said composite having a sealing member (68) positioned around its periphery to maintain an air-tight space between said sheets of glass, said polyester film and said adhesive film approaching but spaced from said spacer, said polyester film being asymmetrically oriented to provide dominant physical properties in its transverse direction.

3. A glazing structure according to any one of the preceding claims wherein said polyester film is a polyethylene terephthalate film and said adhesive film is polyvinyl butyral.

4. A glazing structure according to any one of claims 1 to 3 wherein the adhesive film is polyvinyl butyral.

5. A glazing structure according to any one of the preceding claims wherein crystalline and amorphous regions of said polyester film are oriented preferentially in the transverse direction.

6. A glazing structure according to any one of the preceding claims wherein said adhesive film has a thickness of 0.25 to 1.52 mm.

7. A glazing structure according to any one of the preceding claims wherein the sheet of glass laminated to the polyester film has a thickness of 2 to 12 mm.

8. A glazing structure according to any one of the preceding claims wherein the polyester film has a thickness of from 0.1 to 0.36 mm.

## Patentansprüche

1. Isolierte schlagfeste Verglasungskonstruktion, umfassend zwei Glasscheiben (32) (34), voneinander beabstandet durch ein inneres Abstandselement (42), das längs der Peripherie der Glasscheiben so angeordnet ist, daß ein Gasraum (40) dazwischen entsteht, wobei eine Glasscheibe (32) an ihrer inneren Oberfläche eine Polyesterfolie (36) aufweist, die mittels einer Lage Klebstoffolie (38) an diese Oberfläche geklebt ist, wobei die Konstruktion ein um ihre Peripherie herum angeordnetes Abdichtelement (48) aufweist, um einen luftdichten Raum zwischen den Glasscheiben aufrechtzuerhalten, und wobei die Polyesterfolie asymmetrisch orientiert ist, um vorherrschende physikalische Eigenschaften in ihrer Querrichtung zu schaffen.

2. Isolierte schlagfeste Verglasungskonstruktion mit verbesserter Feuchtigkeitsbeständigkeit, umfassend einen Halterahmen (50) und einen in dem Halterahmen befestigten mehrschichtigen Verbundkörper, wobei der Verbundkörper zwei Glasscheiben (52) (54) umfaßt, voneinander beabstandet durch ein inneres Abstandselement (60), das längs der Peripherie der Glasscheiben so angeordnet ist, daß ein Gasraum (66) dazwischen entsteht, wobei eine der Glasscheiben (54) an ihrer inneren Oberfläche eine Polyesterfolie (56) aufweist, die mit einer Lage Klebstofffolie (58) an diese Oberfläche geklebt ist, wobei der Verbundkörper ein um seine Peripherie herum angeordnetes Abdichtelement (68) aufweist, um einen luftdichten Raum zwischen den Glasscheiben aufrechtzuerhalten, wobei die Polyesterfolie und die Klebstoffolie bis nahe an dem Abstandselement liegen, jedoch von diesem beabstandet sind, und wobei die Polyesterfolie asymmetrisch orientiert ist, um vorherrschende physikalische Eigenschaften in ihrer Querrichtung zu schaffen.

3. Verglasungskonstruktion gemäß einem der vorhergehenden Ansprüche, worin die Polyesterfolie eine Polyethylenterephthalatfolie ist und die Klebstoffolie aus Polyvinylbutyral ist.

4. Verglasungskonstruktion gemäß einem der Ansprüche 1 bis 3, worin die Klebstoffolie aus Polyvinylbutyral ist.

5. Verglasungskonstruktion gemäß einem der vorhergehenden Ansprüche, worin die kristallinen und die amorphen Bereiche der Polyesterfolie vorzugsweise in Querrichtung orientiert sind.

6. Verglasungskonstruktion gemäß einem der vorhergehenden Ansprüche, worin die Klebstoffolie eine Dicke von 0,25 bis 1,52 mm aufweist.

7. Verglasungskonstruktion gemäß einem der vorhergehenden Ansprüche, worin die mit der Polyesterfolie laminierte Glasscheibe eine Dicke von 2 bis 12 mm aufweist.

8. Verglasungskonstruktion gemäß einem der vorhergehenden Ansprüche, worin die Polyesterfolie eine Dicke von 0,1 bis 0,36 mm aufweist.

## Revendications

1. Une structure de vitrage, isolée, résistante au choc, comprenant deux panneaux de verre (32) (34) espacés par un élément d'écartement intérieur (42) disposé le long de la périphérie desdits panneaux de verre pour former un espace de gaz (40) entre eux, un panneau de verre (32) portant, sur sa surface intérieure, une pellicule de polyester (36) adhérant à ladite surface au moyen d'une feuille d'adhésif (38), ladite structure ayant un élément d'étanchéité (48) disposé autour de sa périphérie pour maintenir un espace étanche à l'air entre lesdits panneaux de verre, ladite pellicule de polyester étant orientée asymétriquement pour offrir des propriétés physiques dominantes dans sa direction transversale.

2. Une structure de vitrage, isolée, résistante au choc, ayant une résistance améliorée à l'humidité, comprenant un châssis de support (50) et un composite multicouche fixé dans ledit châssis de support, ledit composite comprenant deux panneaux de verre (52)(54) espacés par un élément d'écartement intérieur (60) disposé le long de la périphérie des panneaux de verre pour former un espace de gaz (66) entre eux, l'un desdits panneaux de verre (54) portant, sur sa surface intérieure, une pellicule de polyester (56) adhérant à ladite surface au moyen d'une feuille d'adhésif (58), ledit composite ayant un élément d'étanchéité (68) disposé autour de sa périphérie pour maintenir un espace étanche à l'air entre lesdits panneaux de verre, ladite pellicule de polyester et ladite feuille d'adhésif approchant, mais étant écartées, dudit élément d'écartement, ladite pellicule de polyester étant orientée asymétriquement pour offrir des propriétés physiques dominantes dans sa direction transversale.

3. Une structure de vitrage selon l'une quelconque des revendications précédentes, dans laquelle ladite pellicule de polyester est une pellicule de polytéréphtalate d'éthylène et ladite feuille d'adhésif est en polyvinylbutyral.

4. Une structure de vitrage selon l'une quelconque des revendication 1 à 3, dans laquelle ladite feuille d'adhésif est en polyvinylbutyral.

5. Une structure de vitrage selon l'une quelconque des revendications précédentes, dans laquelle les régions cristallines et amorphes de ladite pellicule de polyester sont orientées préférentiellement dans la direction transversale.

6. Une structure de vitrage selon l'une quelconque des revendications précédentes, dans laquelle ladite feuille d'adhésif a une épaisseur de 0,25 à 1,52 mm.

7. Une structure de vitrage selon l'une quelconque des revendications précédentes, dans laquelle le panneau de verre stratifié à la pellicule de polyester a une épaisseur de 2 à 12 mm.

8. Une structure de vitrage selon l'une quelconque des revendications précédentes, dans laquelle la pellicule de polyester a une épaisseur de 0,1 à 0,36 mm.
